(19) Europäisches Patentamt
European Patent Office
Office européen des brevets

(11) **EP 2 383 478 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(51) Int Cl.:
***F16C 19/26*** *(2006.01)*     ***F16C 33/34*** *(2006.01)*

(21) Anmeldenummer: **11163621.3**

(22) Anmeldetag: **26.04.2011**

(54) **Rolle und Rollenlager**

Roller and roller bearing

Rouleau et palier à rouleau

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2010 DE 102010018553**

(43) Veröffentlichungstag der Anmeldung:
**02.11.2011 Patentblatt 2011/44**

(73) Patentinhaber: **Aktiebolaget SKF**
**41 550 Göteborg (SE)**

(72) Erfinder: **Rößner, Sonja**
**97516, Oberschwarzach (DE)**

(74) Vertreter: **Schonecke, Mitja**
**SKF GmbH**
**Patentabteilung**
**Gunnar-Wester-Straße 12**
**97421 Schweinfurt (DE)**

(56) Entgegenhaltungen:
**DE-A1-102008 028 164**    **JP-A- 4 331 813**
**US-A- 3 713 712**    **US-A1- 2009 003 747**

**Beschreibung**

Die Erfindung betrifft eine Rolle und ein Rollenlager.

Aus dem Stand der Technik ist eine Reihe von Rollenlagern, insbesondere Zylinder-und Kegelrollenlager bekannt, bei denen wenigstens eines der Abrollflächenelemente für die Rollen mit wenigstens einem sogenannten Bord ausgebildet ist, an dem wenigstens ein äußerer ringartiger Bereich wenigstens einer Stirnseite der Rollen auch bei bestimmungsgemäßem Betrieb des Rollenlagers zum Anlaufen vorgesehen ist. Dieser Bereich kann auch als ein sogenannter Stirnseitenverblendungsbereich speziell ausgebildet sein, an dem sich nach radial außen hin der sogenannte Kantenkürzungsbereich und nach radial innen hin die übrige Stirnseite der Rolle anschließt, wobei die übrige Stirnseite im Wesentlichen plan, mit oder ohne Vertiefung (Dimpel) ausgebildet sein kann.

Beispielsweise in der DE 10 2008 028 164 A1, sowie der DE 102 30 357 B4sind Ausführungsformen für den Verblendungsbereich beschrieben, die aber im Hinblick auf eine geringe Reibung zwischen Rolle und Bord nach wie vor suboptimal sind.

Eine Aufgabe der vorliegenden Erfindung ist es dabei, eine Rolle mit einem verbesserten Verblendungsbereich zu schaffen und ein entsprechendes Rollenlager anzugeben.

Die Aufgabe wird durch den Gegenstand des Patentanspruchs 1 bzw. des Patentanspruchs 9 gelöst. Vorteilhafte Ausgestaltungen sind Gegenstand der abhängigen Unteransprüche.

Gemäß Patentanspruch 1 wird eine Rolle für ein Rollenlager angegeben, wobei das Rollenlager wenigstens eine axiale Anlauffläche für die Rolle aufweist, wobei wenigstens ein sich in einem vorgebbaren Abstand $X_P$ von der Rollenmittenachse bis hin zu einem Kantenkürzungsbereich erstreckender Anlaufabschnitt einer Stirnseite der Rolle gemäß einer gekrümmten Kurve ausgebildet ist, die entsprechend dem Verlauf $h$ in axialer Richtung verlaufend ausgebildet ist, wobei

$$h(x) = h_1 \left( \frac{x}{L_{\text{eff}}} \right)^{K_1} + h_2 \left( \frac{L_{\text{eff}} - x}{h_p} \right)^{K_2}$$

ist und wobei $x$ der radiale Abstand von der Rollenmittenachse ist, $h_1$ und $h_2$ Konstanten sind, $L_{eff}$ der effektive Stirnseitenradius der Rolle mit

$$L_{\text{eff}} = 0{,}5 \cdot D_w - r_w,$$

$h_p$ die maximale Höhe des Anlaufabschnitts, sowie $K_1$ und $K_2$ Konstanten, die den Verlauf des gekrümmten Bereichs beschreiben sind. $r_w$ bezeichnet die Kantenkürzung der Rolle. Erfindungsgemäß liegen die Werte von $K_1$ und $K_2$ jeweils zwischen 10 und 50.

Die erfindungsgemäße Rolle weist einen optimierten Verlauf der Stirnseite im Anlaufabschnitt auf, sodass eine gute Rollenführung insbesondere bei niedrigen Anlaufflächen oder nicht ideal ausgebildeten Anlaufflächen gewährleistet ist. Der gewählte Verlauf im Anlaufabschnitt führt zu einer Verminderung von Kontaktspannungen zwischen dem Anlaufabschnitt der Rolle und der Anlauffläche des Rollenlagers. Der Berührpunkt zwischen Anlauffläche und Anlaufabschnitt der Rolle wird dabei radial soweit wie möglich außen gehalten, wodurch sich ein erhöhtes Rückstellmoment auf die Rolle ergibt. Dies führt insbesondere zu einer Verringerung der Neigung der Rolle beim so genannten Schränken relativ zu einer senkrechten Achse oder einem Verkippen der Rolle, wobei der Berührpunkt durchaus bis an die obere Kante der Anlauffläche wandern kann. Insbesondere in diesem Fall kann es bei aus dem Stand der Technik bekannten Lagern zu Ausfällen durch erhöhten Abrieb der Rollen an der Kante der Anlauffläche kommen.

In einer vorteilhaften Ausgestaltung der Erfindung sind die Werte $h_1$ und $h_2$ jeweils kleiner als der Durchmesser der Stirnseite $D_W$ der Rolle. Insbesondere ist es vorteilhaft, wenn $h_1$ im Bereich von 0,015% bis 0,05% des Rollendurchmessers $D_W$ und/oder $h_2$ im Bereich von 0,04% bis 0,25% des Rollendurchmessers $D_W$ liegt.

Bereiche für die dimensionslosen Konstanten $K_1$ und $K_2$ sind jeweils 10 bis 50, vorteilhaft der Bereich von 20 bis 50 für $K_1$ und 10 bis 30 für $K_2$. Bei entsprechender Wahl der Werte und Konstanten in den angegebenen Bereichen weist die Rolle ein besonders optimiertes Stirnseitenprofil auf, so dass die Kontaktspannung minimiert und die Führung der Rolle optimiert ist.

In einer vorteilhaften Ausgestaltung der Erfindung weist die Rolle bezüglich des Anlaufabschnitts eine radial innen liegende Vertiefung auf. In sofern ergibt sich zwischen der Vertiefung und dem Bereich der Kantenkürzung einen radial umlaufende Erhöhung im Anlaufabschnitt, die axial bezüglich der Vertiefung übersteht. Dies ist insbesondere von Vorteil, wenn die Rolle durch nicht ideal ausgebildete Anlaufflächen nicht optimal geführt werden kann. Durch den gewählten Verlauf des Anlaufabschnitts ist dann stets sichergestellt, dass die Rolle auch bei starker Schränkung einen optimierten Kontakt zur Anlauffläche des Rollenlagers hat und Kontaktspannungen minimiert sind. Die Ausgestaltung des Anlaufabschnitts stellt einen im Idealfall ellipsenförmigen Kontakt zur Anlauffläche sicher.

Gemäß Patentanspruch 9 wird ein Rollenlager mit Rollen nach einem der Ansprüche 1 bis 8 angegeben. Das entsprechende Rollenlager profitiert von den vorteilhaften Eigenschaften der Rollen in Bezug auf die auftretenden Kontaktspannungen und der erhöhten Belastbarkeit. Das Rollenlager weist sich insbesondere durch eine verbesserte Rollenführung bei gleichzeitig verringertem Reibmoment im Vergleich zu bekannten Rollenlagern aus. Die axiale Tragfähigkeit hinsichtlich Reibung und Wärmeentwicklung sind weiter erhöht.

Weitere Vorteile und Ausgestaltungen der Erfindung ergeben sich aus dem nachfolgend beschriebenen Ausführungsbeispiel im Zusammenhang mit den beigefügten Figuren. Es zeigen:

Figur 1 eine schematische Darstellung eines Rollenlagers gemäß einem Ausführungsbeispiel der Erfindung,

Figur 2 eine ausschnittsweise schematische Darstellung des Rollenlagers der Figur 1,

Figur 3 eine schematische Ansicht einer bekannten Zylinderrolle in einem Rollenlager,

Figur 4 eine analoge Darstellung einer Zylinderrolle gemäß einer Ausführungsform der Erfindung und

Figur 5 eine schematische Darstellung verschiedener Profilverläufe einer Rollenstirnseite entsprechend verschiedener Ausführungsformen der Erfindung.

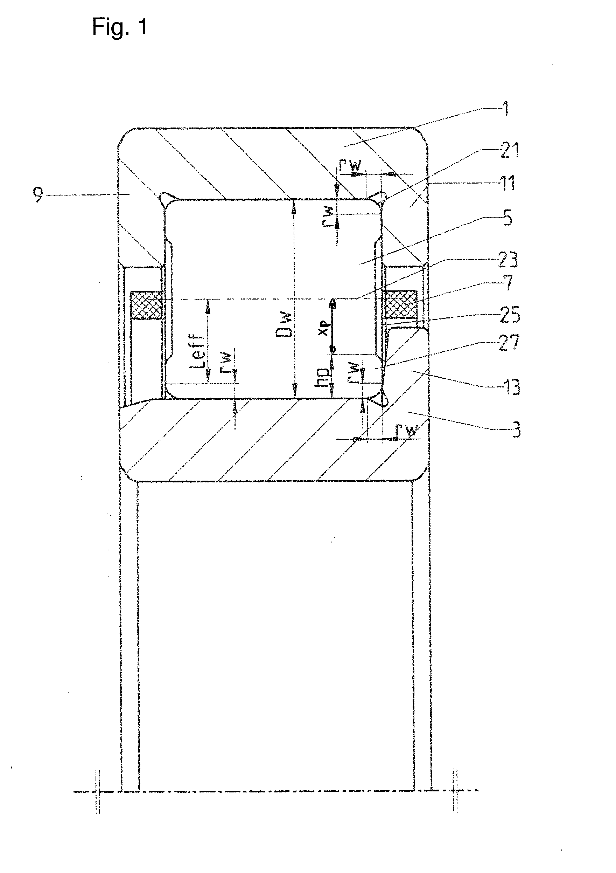

In die Figur 1 ist schematisch ein Zylinderrollenlager gemäß einem bevorzugten Ausführungsbeispiel der Erfindung dargestellt. Es umfasst einen Außenring 1 und einen Innenring 3, die über Zylinderrollen 5 drehbar gegeneinander gelagert sind. Radial umlaufend ist eine Vielzahl von Zylinderrollen 5 angeordnet. Die Zylinderrollen 5 werden mittels eines Käfigs 7 beabstandet gehalten. In alternativen Ausführungsformen der Erfindung können ebenfalls vollrollige Lager, die also die maximale Rollenanzahl und daher keinen Käfig aufweisen mit den erfindungsgemäßen Rollen bestückt werden.

Zur Führung der Zylinderrollen 5 weist der Außenring 1 axial endseitig ausgebildete Borde 9 und 11 auf. Die Borde 9 und 11 dienen jeweils als Anlauffläche für die axial benachbarte Stirnseite 25 der Zylinderrollen 5 und stellen somit eine Führung für die Zylinderrollen 5 bereit. Der Innenring 3 weist einen Bord 13 auf, der ebenfalls eine Anlauffläche für die Zylinderrollen 5 bereitstellt und zur Führung der Zylinderrollen 5 beiträgt. Die Zylinderrollen 5 weisen im Bereich der Borde 9, 11 und 13 radial umlaufende Abschnitte 27 der Stirnseiten 25 auf, die das Anlaufverhalten und die Führung der Zylinderrollen gemäß der Erfindung verbessern. Die Abschnitte 27 der Stirnseite 25 gehen radial außen und innen in eine Kantenkürzung 21 über, die eine Verrundung der Kanten der Zylinderrollen 5 darstellt.

In der Figur 1 sind zur Veranschaulichung der Erfindung mehrere Dimensionen der Zylinderrollen 5 dargestellt. Es bezeichnen dabei:

$D_w$ den Durchmesser der Zylinderrolle 5,
$h_p$ die Höhe des Abschnitts 27,
$r_w$ die Kantenkürzung 21 und
$L_{eff}$ den effektiven Stirnseitenradius der Zylinderrolle 5: $L_{eff} = 0{,}5 \cdot D_w - r_w$
$X_P$ einen vorgebbaren Abstand von der Rollenmittenachse bis zum Abschnit 27

Der Abschnitt 27 ist im vorliegenden Ausführungsbeispiel durch die anschließende Vertiefung im Bereich der Rollenachse 23 begrenzt, wodurch auch $h_p$ entsprechend dimensioniert ist. In alternativen Ausführungsbeispielen der Erfindung lassen sich vergleichbare Vorteile bei Rollen erzielen, die eine analog geformten Abschnitt 27 aufweisen und keine Vertiefung in der Rollenmitte.

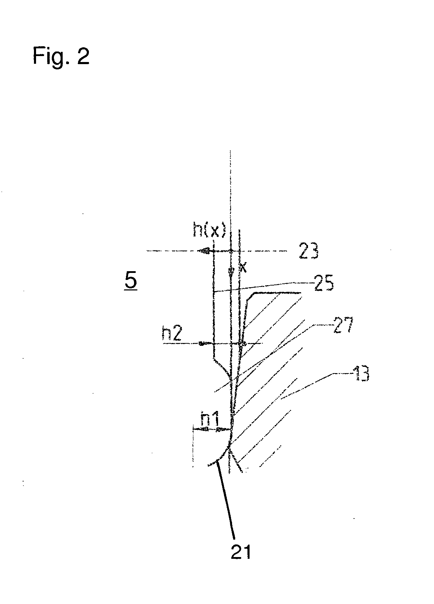

In Figur 2 ist eine ausschnittsweise Vergrößerung des Zylinderrollenlagers dargestellt. Gezeigt werden lediglich ein Ausschnitt des Bords 13 und einer Zylinderrolle 5 im Bereich des Abschnitts 27. Die Rollenmittelachse 23 ist durch eine gestrichelte Linie angedeutet. Ausgehend von der Mitte der Zylinderrolle 5 weist die Stirnseite 25 zunächst einen im Wesentlichen parallel zur radialen Richtung verlaufenden, beispielsweise geraden Abschnitt auf. Dieser muss bezüglich des Verlaufs nicht exakt definiert sein. Im Bereich des Bords 13 geht die Stirnseite 25 jedoch in den gekrümmten Abschnitt 27 über, der wiederum in den Bereich der Kantenkürzung 21 übergeht. Durch den nach außen gekrümmten Abschnitt 27 weist die Stirnseite 25 im geraden Abschnitt eine Vertiefung (Dimpel) auf, so dass in diesem Bereich ein axialer Abstand zum Bord 13 vorliegt. Aufgrund des gekrümmten vorstehenden Abschnitts 27 ist die Berührungsfläche zwischen dem Bord 13 und der Zylinderrolle 5 auf einen kleinen Bereich minimiert, im Idealfall in Umfangsrichtung auf einen ellipsenförmigen Kontakt begrenzt.

Der gekrümmte Bereich 27 verläuft im Querschnitt in axialer Richtung gemäß einer Kurve *h,* wobei

$$h(x) = h_1 \left( \frac{x}{L_{\text{eff}}} \right)^{K_1} + h_2 \left( \frac{L_{\text{eff}} - x}{h_p} \right)^{K_2}$$

ist. *x* bezeichnet dabei den radialen Abstand zur Rollenmittelachse 23. $h_i$ ist dabei ein Startwert, der bevorzugt im Bereich von 0,015% bis 0,05% des Rollendurchmessers $D_W$ liegt. $h_2$ ist ein Zielwert, der bevorzugt im Bereich von 0,04% bis 0,25% des Rollendurchmessers $D_W$ liegt. Sowohl $h_1$, als auch $h_2$ sind in der Figur 2 lediglich exemplarisch dargestellt und liegen meist im Bereich einiger $\mu$m. $K_1$ ist eine Konstante, die bevorzugt im Bereich zwischen 10 und 50, besonders bevorzugt zwischen 20 und 50 liegt. $K_2$ ist eine Kostante, die bevorzugt im Bereich zwischen 10 und 50, besonders bevorzugt zwischen 10 und 30 liegt. Durch die entsprechend dem genannten Verlauf ausgebildete Krümmung des Abschnitts 27 ergibt sich eine besonders vorteilhafte Führung der Zylinderrollen 5 durch den Bord 13. Insbesondere werden durch die exakt definierte Berührung der Zylinderrolle 5 und des Bords 13 Kontaktspannungen minimiert und gleichzeitig der Berührpunkt radial soweit außen wie möglich gehalten. Kommt es zu einem Schränken (also einer Schrägstellung bezüglich einer senkrecht zur Laufbahn stehenden Achse) oder einem Kippen (also einer Schrägstellung bezüglich einer tangential zur Laufbahn verlaufenden Achse) der Rolle, so wandert der Berührpunkt zwischen der Zylinderrolle 5 und dem Bord 13 radial nach außen. Gleichzeitig zeichnet sich die Zylinderrolle 5 durch ein besonders geringes Reibmoment am Bord auf.

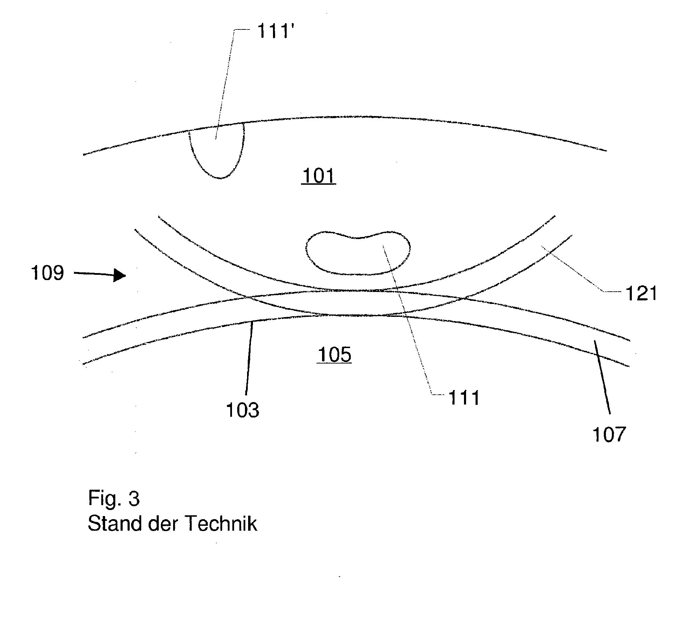

In Figur 3 ist ausschnittsweise in schematischer Darstellung einer bekannten Zylinderrolle 101 dargestellt, die auf einer Laufbahn 103 des Innenrings 105 eines Zylinderrollenlagers abrollt. Die Zylinderrolle 101 weist radial außen liegend einen Bereich einer suboptimalen Kantenkürzung 121 auf. Entsprechend ist am Innenring 105 ein Einstich 107 vorgesehen. Zur Führung der Zylinderrolle 101 weist der Innenring 105 einen Bord 109 auf, an dem diese in einer Kontaktzone in einem Bereich 111 anliegt. Kommt es zu einem Schränken oder Kippen der Zylinderrolle 101, so wandert die Kontaktzone je nach Ausprägung nach außen zum Rand der Bords 109, so dass sie nunmehr im Bereich 111' liegt.

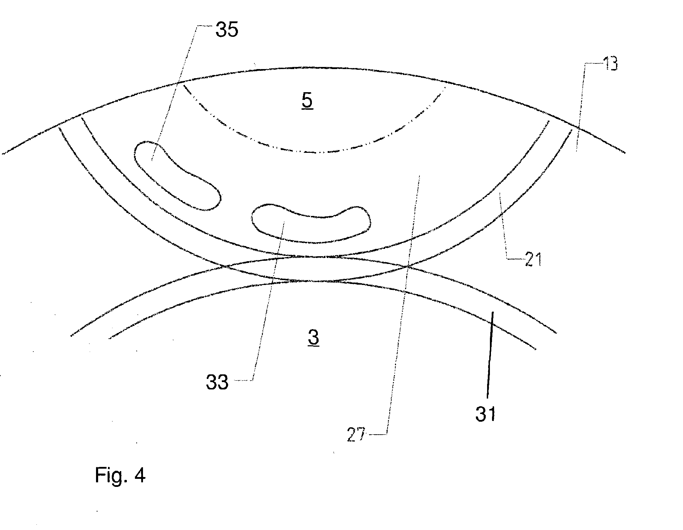

In der Figur 4 ist in analoger Darstellung zur Figur 3 eine Ausführungsform der Erfindung dargestellt. Die Kantenkürzung 21 der Zylinderrolle 5 läuft im Bereich eines Einstichs 31 des Innenrings 3. Das Profil 27 wird am Bord 13 geführt. Bei geradem Lauf der Zylinderrolle 5 liegt diese in einer Kontaktzone im Bereich 33 am Bord an. Aufgrund der optimierten Ausführung des Abschnitts 27 wandert die Kontaktzone bei vergleichbaren Betriebsbedingungen des Zylinderrollenlagers jedoch nicht soweit nach außen wie bei bekannten Ausführungen (vgl. Figur 3). Bei Schränken oder Verkippen der Zylinderrolle 5 entsteht durch die Wechselwirkung des Abschnitts 27 mit dem Bord 13 ein Rückstellmoment auf die Zylinderrolle 5. Die Kontaktzone zum Bord 13 verändert daher ihre Lage nur vergleichweise gering und liegt in einem Bereich 35. Durch das verminderte Wandern der Kontaktzone beim Schränken oder Kippen wird das Reibmoment und die Ausfallwahrscheinlichkeit des Rolle-Bordkontakts minimiert und es lassen sich die erfindungsgemäßen Zylinderrollen 5 insbesondere in Wälzlagern mit geringer Bordhöhe einsetzen.

Selbst im Fall eines derart starken Schränken oder Kippens der Zylinderrolle 5, dass die Kontaktzone zum äußeren Rand des Bords 13 wandert, werden durch das Profil 27 Kantenspannungen zwischen der Zylinderrolle 5 und dem Bord 13 minimiert, so dass die Fressneigung der Zylinderrolle 5 am Bord 13 verringert wird. Die Zylinderrolle 5 wird durch das optimierte Profil 27 definiert am Bord 13 geführt. Dies resultiert auch in einem geringeren Reibmoment. Bei Borden geringer Höhe oder geringem Öffnungswinkel, die sich also parallel zur radialen Richtung erstrecken wird die Belastung der Zylinderrolle 5 minimiert.

Zylinderrollen gemäß dem hier beschriebenen Ausführungsbeispiel lassen sich beispielsweise durch Hartdrehen oder elektrochemische Metallbearbeitung erzeugen. Dabei werden die Stirnseiten durch entsprechende Prozesse innerhalb enger Toleranzen gefertigt.

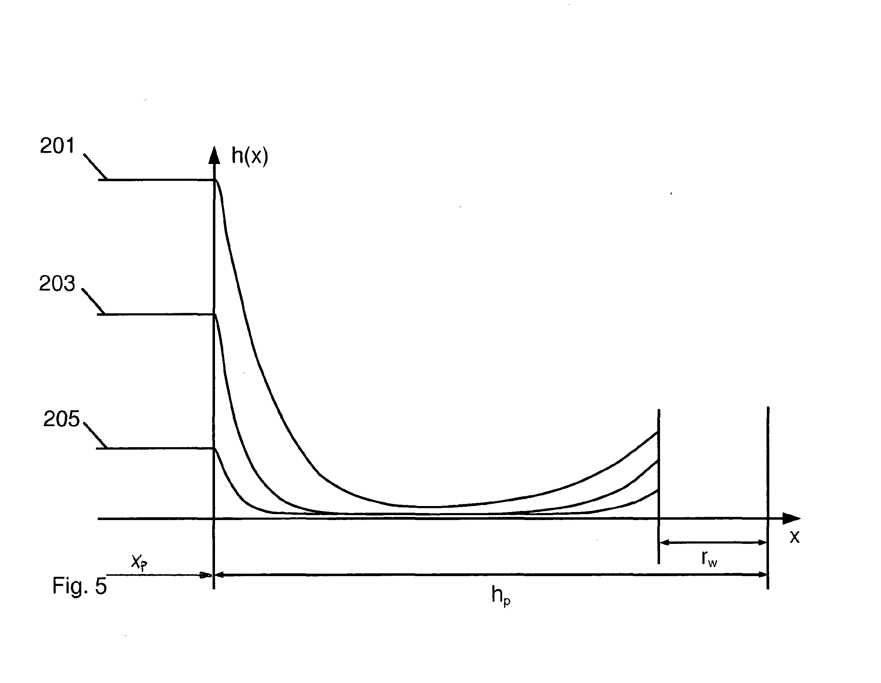

In der Figur 5 sind exemplarisch drei Verläufe für die Profile 27 gemäß der oben erläuterten Formel dargestellt. In horizontaler Richtung von links nach rechts erstreckt sich der Verlauf von *x*, während *h(x)* senkrecht dazu aufgetragen ist (vgl. auch Fig. 2). Dabei sind zwei Einhüllende 201 und 205 gezeigt, die mit bevorzugten Extremwerten der Parameter $h_1$ und $h_2$, sowie $K_1$ und $K_2$ berechnet wurden. Für die Einhüllende 201 wurden die Parameter

$$h_1 = 0,05\% \cdot D_W,$$

$$h_2 = 0{,}25\% \cdot D_W \,,$$

$$K_1 = 20$$

und

$$K_2 = 10$$

gewählt. Für die Einhüllende 205 wurden die Parameter

$$h_1 = 0{,}015\% \cdot D_W \,,$$

$$h_2 = 0{,}04\% \cdot D_W \,,$$

$$K_1 = 50$$

und

$$K_2 = 30$$

gewählt.

Zwischen den Einhüllenden 201 und 205 ist eine weitere Kurve 203 gezeigt, die aus mittleren Werten der Parameter resultiert. Ausgehend vom linken Rand der Figur 5 ist ausschnittsweise der mittlere Bereich ("Dimpel") der jeweiligen Zylinderrolle gezeigt, der im Wesentlichen waagerecht verläuft. Der Bereich geht dann ab einem vorgebbaren Abstand $x_P$ in den in der gewählten Darstellung nach unten ausfallenden Bereich des optimierten Profils über, der wiederum weiter rechts ansteigt und in den hier nicht dargestellten Bereich der Kantenkürzung $r_w$ übergeht. Im Bereich des Profils läge die Zylinderrolle entsprechend am Bord des Rollenlagers an.

Alternativ lassen sich andere Ausführungsbeispiele der Erfindung ohne Vertiefung im mittleren Bereich beschreiben. Dies wäre im Vergleich zur Figur 5 beispielsweise bei deutlich geringeren Werten von $h_p$ der Fall, so dass der Abschnitt gemäß der Kurve bereits im nahezu waagerechten Bereich endet und nicht zu einer Vertiefung abfällt.

Zusammenfassend lässt sich sagen, dass durch die erfindungsgemäßen Rollen mit definiertem Stirnseitenprofil die Kontaktzone bei normalen Betriebsbedingungen des Lagers in einem niedrigen Bereich des Bords gehalten wird und auch bei stärkerem Kippen oder Schränken ein Rückstellmoment ohne Auftreten von Kantenspannungen entsteht.

**Bezugszeichenliste**

| | |
|---|---|
| 1 | Außenring |
| 3 | Innenring |
| 5 | Zylinderrollen |
| 7 | Käfig |
| 9 | Bord |
| 11 | Bord |

13 Bord
21 Kantenkürzung
23 Rollenmittelachse
25 Stirnseite
27 gekrümmter Abschnitt

201, 205 Einhüllende

203 Kurve

**Patentansprüche**

1. Rolle (5) für ein Rollenlarger wobei das Rollenlager wenigstens eine axiale Anlauffläche (9, 11, 13) für die Rolle (5) aufweist, wobei wenigstens ein sich in einem vorgebbaren Abstand Xp von der Rollenmittenachse (23) bis hin zu einem Kantenkürzungsbereich (21) erstreckender Abschnitt (27) einer Stirnseite (25) der Rolle (5) gemäß einer gekrümmten Kurve ausgebildet ist, die entsprechend dem Verlauf h verlaufend ausgebildet ist, wobei

$$h(x) = h_1 \left( \frac{x}{L_{\text{eff}}} \right)^{K_1} + h_2 \left( \frac{L_{\text{eff}} - x}{h_p} \right)^{K_2}$$

ist und wobei x der Abstand von der Rollenmittenachse (23) ist, wobei $h_1$ und $h_2$ jeweils kleiner als der Durchmesser $D_w$ der Rolle sind, $L_{\text{eff}}$ der effektive Stirnseitenradius der Rolle (5), $h_p$ die Höhe des Abschnitts (27), sowie $K_1$ und $K_2$ Konstanten sind, wobei $K_1$ und $K_2$ jeweils im Bereich von [10...50] liegen.

2. Rolle nach Anspruch 1, wobei

$$L_{\text{eff}} = 0{,}5 \cdot D_w - r_w$$

ist, wobei $D_w$, der Rollendurchmesser und $r_w$ die Kantenkürzung ist.

3. Rolle nach Anspruch 1 oder 2, wobei $h_1$ im Bereich von 0,015% bis 0,05% des Rollendurchmessers $D_w$ liegt.

4. Rolle nach einem der Ansprüche 1 bis 3, wobei $h_2$ im Bereich von 0,04% bis 0,25% des Rollendurchmessers $D_w$ liegt.

5. Rolle nach einem der Ansprüche 1 bis 4, wobei $K_1$ im Bereich von $K_1$ = [20...50] liegt.

6. Rolle nach einem der Ansprüche 1 bis 5, wobei $K_2$ im Bereich von $K_2$ = [10...30] liegt.

7. Rolle nach einem der Ansprüche 1 bis 6, wobei die Stirnseite einen bezüglich des Anlaufabschnitts radial innen liegenden Muldenabschnitt aufweist, der derart ausgebildet ist, dass sein axialer Abstand zur axialen Anlauffläche größer ist als der axiale Abstand des Anlaufabschnitts zur axialen Anlauffläche.

8. Rolle nach einem der Ansprüche 1 bis 7, wobei die Rolle als eine Zylinderrolle eines Zylinderrollenlagers ausgebildet ist.

9. Rollenlager mit Rollen nach einem der Ansprüche 1 bis 8.

**Claims**

1. Roller (5) for a roller bearing, the roller bearing having at least one axial run-on surface (9, 11, 13) for the roller (5), wherein at least one section (27), extending at a predefinable spacing $x_p$ from the roller centre axis (23) as far as an edge shortening region (21), of an end side (25) of the roller (5) is configured according to an arched curve which is configured so as to run in accordance with the course $h$, wherein

$$h(x) \ = \ h_1\left(\frac{x}{L_{eff}}\right)^{K_1} \ + \ h_2\left(\frac{L_{eff} \ - \ x}{h_p}\right)^{K_2}$$

and wherein x is the spacing from the roller centre axis (23), wherein $h_1$ and $h_2$ are in each case smaller than the diameter $D_w$ of the roller, $L_{eff}$ is the effective end-side radius of the roller (5), $h_p$ is the height of the section (27), and $K_1$ and $K_2$ are constants, wherein $K_1$ and $K_2$ in each case lie in the range of [10...50].

2. Roller according to Claim 1, wherein

$$L_{eff} \ = \ 0.5 \ \bullet \ D_w \ - \ r_w,$$

wherein $D_w$ is the roller diameter and $r_w$ is the edge shortening.

3. Roller according to Claim 1 or 2, wherein $h_1$ lies in the range of from 0.015% to 0.05% of the roller diameter $D_w$.

4. Roller according to one of Claims 1 to 3, wherein $h_2$ lies in the range of from 0.04% to 0.25% of the roller diameter $D_w$.

5. Roller according to one of Claims 1 to 4, wherein $K_1$ lies in the range of $K_1 = [20...50]$.

6. Roller according to one of Claims 1 to 5, wherein $K_2$ lies in the range of $K_2 = [10...30]$.

7. Roller according to one of Claims 1 to 6, wherein the end side has a recess section which lies radially on the inside with regard to the run-on section and is configured in such a way that its axial spacing from the axial run-on surface is greater than the axial spacing of the run-on section from the axial run-on surface.

8. Roller according to one of Claims 1 to 7, wherein the roller is configured as a cylindrical roller of a cylindrical roller bearing.

9. Roller bearing having rollers according to one of Claims 1 to 8.


**Revendications**

1. Rouleau (5) pour un palier à rouleaux, le palier à rouleaux présentant au moins une surface de butée axiale (9, 11, 13) pour le rouleau (5), au moins une section (27) d'un côté frontal (25) du rouleau (5), laquelle s'étend à un écart Xp pouvant être prédéfini depuis l'axe central du rouleau (23) jusqu'à une zone de raccourcissement des bords (21), étant configurée selon une courbe curviligne qui est formée conformément au tracé h, avec lequel

$$h(x) \ = \ h_1\left(\frac{x}{L_{eff}}\right)^{K_1} \ + \ h_2\left(\frac{L_{eff} \ - \ x}{h_p}\right)^{K_2}$$

et x désignant l'écart de l'axe central du rouleau (23), $h_1$ et $h_2$ étant respectivement inférieurs au diamètre $D_w$ du rouleau, $L_{eff}$ désignant le rayon effectif du côté frontal du rouleau (5), $h_p$ la hauteur de la section (27) et $K_1$ ainsi que $K_2$ des constantes, $K_1$ et $K_2$ étant respectivement compris dans la plage de [10...50].

**2.** Rouleau selon la revendication 1, avec lequel $L_{eff} = 0,5 \cdot D_w - r_w$,
$D_w$ désignant le diamètre du rouleau et $r_w$ le raccourcissement des bords.

**3.** Rouleau selon la revendication 1 ou 2, avec lequel $h_1$ est compris dans la plage de 0,015 % à 0,05 % du diamètre du rouleau $D_w$.

**4.** Rouleau selon l'une des revendications 1 à 3, avec lequel $h_2$ est compris dans la plage de 0,04 % à 0,25 % du diamètre du rouleau $D_w$.

**5.** Rouleau selon l'une des revendications 1 à 4, avec lequel $K_1$ est compris dans la plage $K_1 = [20...50]$.

**6.** Rouleau selon l'une des revendications 1 à 5, avec lequel $K_2$ est compris dans la plage $K_2 = [10...30]$.

**7.** Rouleau selon l'une des revendications 1 à 6, avec lequel le côté frontal présente une section en auge qui se trouve à l'intérieur dans le sens radial par rapport à la section de butée, laquelle est configurée de telle sorte que son écart axial par rapport à la surface de butée axiale est supérieur à l'écart axial de la section de butée par rapport à la surface de butée axiale.

**8.** Rouleau selon l'une des revendications 1 à 7, avec lequel le rouleau est réalisé sous la forme d'un rouleau cylindrique d'un palier à rouleaux cylindriques.

**9.** Palier à rouleaux muni de rouleaux selon l'une des revendications 1 à 8.

## Fig. 1

# Fig. 2

Fig. 3
Stand der Technik

Fig. 4

Fig. 5

EP 2 383 478 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008028164 A1
- DE 10230357 B4